# EUROPEAN PATENT SPECIFICATION

(11) **EP 2 523 851 B1**
(45) Date of publication and mention of the grant of the patent: **26.12.2018**
(21) Application number: 10843332.7
(22) Date of filing: 14.01.2010
(51) Int. Cl.: B64C 21/00, B29C 70/14, B64C 11/16, B64C 21/10, B64C 27/46, B82B 1/00

(54) **AN AERODYNAMIC SURFACE WITH IMPROVED PROPERTIES**
AERODYNAMISCHE OBERFLÄCHE MIT VERBESSERTEN EIGENSCHAFTEN
SURFACE AÉRODYNAMIQUE AVEC PROPRIÉTÉS AMÉLIORÉES

(43) Date of publication of application: 21.11.2012
(73) Proprietor: Saab AB, 581 88 Linköping (SE)
(72) Inventor: NORDIN, Pontus, S-587 25 Linköping (SE); STRINDBERG, Göte, S-589 41 Linköping (SE)
(74) Representative: Zacco Sweden AB
(86) International application number: PCT/SE2010/050027
(87) International publication number: WO 2011/087411

(56) References cited:
- WO-A1-2008/140972
- WO-A1-2008/140972
- WO-A2-2008/048705
- WO-A2-2009/080048
- US-A1- 2009 181 239
- US-A1- 2010 155 524

## Description

### TECHNICAL FIELD

The present invention relates to an article comprising an outer surface, which serves as an aerodynamic surface when the article's outer surface is subjected for an air stream, according to the preamble of claim 1.

The invention primarily regards articles manufactured by aircraft manufacturers. The invention may also regard other fixed wing, rotary wing, propellers, aero-engine fan blades and open rotor aircraft components as well as other and aircraft components with aerodynamic requirements, wherein the component is designed with an aerodynamic surface.

### BACKGROUND ART

Components, such as composite airframe structures of the type wing skins, fin skins, control surfaces, open rotor blades etc., having aerodynamic function, are designed and manufactured with a certain surface texture/roughness, allowable steps, gaps and waviness which affect airflow over the airframe's skin surface (i.e. the outer surface). The materials- and manufacturing technology used today producing such surface roughment limits the aerodynamic efficiency of the airframe structures, e.g. regarding the possibility to achieve laminar air flow over a wing, fin, control surface etc.

This situation is not improved by the current standard procedure to apply a coating (paint layer) on the airframe to provide a smooth protective skin surface.

The airframe's skin surface is also prone to surface defects as a consequence of for example cure shrinkage of the polymeric material during the manufacture of the airframe and the skin surface may also be exposed to impacts and damage during flight and service.

Different types of skin coating exist today, such as paint coatings having strength properties, paint systems for protecting and maintaining the smoothness of the outer surface thereby promoting the aerodynamic performance of the component during flight.

Today, research and development efforts are present within the aircraft industry to produce more environmental friendly aircraft. One solution is to develop the aircraft's power plants so that they are more efficient requiring less fuel. Another way is to save weight of the structural parts of the aircraft, whereby the fuel consumption can be reduced. A third possible solution, addressed in this invention, is to improve the aerodynamic efficiency of all aircraft surfaces.

It is desirable to provide an aircraft, which is environmental friendly, without or in combination with the solutions described in the foregoing paragraph.

Current technology airframe components made from aluminum, carbon fiber composites, ceramics and other materials with existing manufacturing methods suffer from a significant surface roughness, steps, gaps and waviness etc. due to insufficient manufacturing methods, and operational use (rain and sand erosion etc).

Regarding a polymer-based fiber composite aerodynamic surface, such as a wing skin or a skin of another aircraft component, the outer surface layer consists of un-reinforced plastic material, typically covered by a layer of paint. This surface layer will result in a significant surface roughness due to several contributing effects, e.g cure shrinkage of the polymeric material, uneven distribution of resin in the surface layer (resin-rich areas) and different thermal elongation of surface material. Currently used technology also results in a surface layer having an outer surface, which is prone to surface defects during manufacturing of the component, damage due to erosion during service and other characteristics which shorten the service life of the wing surface and (primary concern) reduce the aerodynamic efficiency. The described drawbacks of currently used technology are also valid for all types of aerodynamic airframe components such as canards, horisontal and vertical fins, movable control surfaces and the fuselage structure itself. This is also applicable for components such as propellers, open rotors, aero-engine fan blades and similar structures.

Nano structure technology (such as nano fibres/tubes in polymeric materials) is an emerging technology of interest to the aircraft industry. This is due to the high strength and stiffness, as well as other properties such as low thermal elongation, of the nano fibres/tubes embedded in the polymeric material.

WO 2008/048705 discloses a surface film provided with nano particles for strengthening the surface against microcracking caused by lightening strikes. Document WO2008/140972A1 discloses a cooling system with all features of the preamble of claim 1.

It is desirable in an effective manner to provide and maintain the smoothness of the article's outer surface of the laminate during the manufacture of the article. It is also desirable to maintain the smoothness of the outer surface during the service and/or flight of the aircraft. It would thus be beneficial for the aerodynamic efficiency of the article if the outer surface were smooth during the whole service life, thereby promoting a reduced fuel consumption of the aircraft and achieving a cost-effective and environmental friendly transportation of people and goods.

It is further desirable to provide an article which is cost-effective to produce, which article per se is resistant against damages on the outer surface during the production, and which article has an outer surface which is hard, smooth and form stable.

An object is to minimize the maintenance cost for an aircraft, at the same time as a reduced fuel consumption of the aircraft during its whole service life is achieved.

It may be desirable to use rear-mounted "open rotor" aero-engines (unducted fans), since such engines are environmental friendly due to low fuel consumption. However, they are not so well suited for commercial aircrafts since they are noisy due to a high tip speed and the aerodynamic performance of the rotor blades.

An object is thus to develop the open rotor blades of rear-mounted "open rotor" engines so that they are more silent during take-off, thus creating a possibility for use of environmental friendly aircraft.

A further object is also to eliminate drawbacks of known techniques and improve the properties of the article by an effective production.

### SUMMARY OF THE INVENTION

This has been achieved by the article defined in the introduction being characterized by the features of the characterizing part of claim 1.

In such way an article is achieved with improved properties (being discussed in the introduction). By a unidirectional orientation of the nano filaments an efficient production of the laminate will be provided. This can be achieved by an upper ply in the form of a nano structure mat being embedded in the resin and having filaments with a random orientation in a plane such that the filaments are parallel with the plane of the upper surface. The production includes a step of introducing a resin (used as a matrix for embedding the nano filaments) into a mat of nano filaments or between separate unidirectional nano filaments. The extending -in two dimensions or in one dimension- nano filaments are thus arranged with proper extension for optimal resin fill out during the production of the laminate. The introduction of resin will have not be obstructed or hindered and the resin will fill out all air spaces between the nano filaments. Thereby the outer surface will be smooth and hard and form stable.

Thereby is provided materials and methods for design and manufacturing of aerodynamic surfaces which are far more perfect in shape and surface quality than existing technology surfaces. These improved quality surfaces support the introduction of laminar flow aircraft components to a greater extent than possible with existing technology surfaces.

In such way is achieved that the article's outer surface (aerodynamic surface) is near perfect regarding shape and surface quality as well as more damage tolerant, durable and hard compared to existing technology surfaces. Eventual cure shrinkage of the resin in the different plies during manufacture of the article, -and eventual uneven distribution of resin in the outer ply and different thermal elongation in the outer ply or plies during the manufacture-, will thereby not affect the smoothness of the skin surface since the nano structure, embedded in the outer ply/plies, will make the outer surface hard holding back eventual cure shrinkage forces. The resin matrix of the laminate will have no air pockets or uneven distribution of resin, which is achieved by that the filaments in the ply have the same orientation relative the plane of the outer surface of the laminate, wherein the resin during manufacture of the laminate will effectively fill the gaps between the nano filaments.

By forming the article of a laminate of plies, each ply having a specific fibre orientation so that the plies together make the article structural, and the outer ply is provided with the nano structure, the article can be used as an airframe (or other aerodynamic article) structure having an aerodynamic surface which is smooth and hard. The article is thus resistant to cracks in the outer surface and also resistant to erosion during its use. The present solution will thus result in a smooth outer surface having a long life, which is energy saving and efficient.

The hard and therefore over long time smooth outer surface of the article promotes the use of the article as an open rotor blade. Due to the long-life smoothness and hardness, laminar air flow over the aerodynamic surface of the open rotor blade is achieved, whereby turbulence is eliminated to a great extent and the open rotor engine will function more silent than open rotor engines used today.

The hard and therefore over long time smooth outer surface of the article promotes the use of the article as an airframe (wing, stabiliser, air intake etc.) of an aircraft. Due to the achieved laminar flow over the aerodynamic surface of the air frame, the fuel consumption of the aircraft will be reduced compared with an aircraft of today. Such reduced fuel consumption would be environmental friendly.

Alternatively, the outer ply comprises a nano structure embedded therein in such way that the nano filaments of the nano structure in the ply have the same angular orientation relative the plane of the outer surface, which means that the nano filaments can be oriented parallel coplanar or in parallel planes or that the nano filaments can have different orientations in at least one plane but with an extension parallel or with an angle relative said plane.

Alternatively, at least a portion of the nano structure is exposed in the outer surface.

The nano structure partly exposed in the outer surface and being embedded in the outer ply gives an effect that the outer ply is compatible regarding the thermal elongation with both glass fibre reinforced plastics (GFRP) and carbon fibre reinforced plastic (CFRP) structures. A common outer surface film or ply (such as ordinary paint) of today, for increasing the laminar flow, has often no reinforcements which makes it is less compatible with GFRP and CFRP due to a higher thermal expansion of the outer ply, which may cause debonding, cracks etc.

The nano structure's filaments are each comprised of an extended nano filament including a first and a second end. The nano structure is suitably partly exposed in the outer surface such that a part of the nano structure comprises first ends exposed in the outer surface.

The nano structure may be comprised of carbon nano tubes, carbon nano fibres, carbon nano wires etc.

In addition to aerodynamically efficient surface coatings of constant or near-constant thickness, CNT-reinforced surface materials can alternatively also be applied as textured or micro-structured surface layer, so called riblets. The riblet technology is based on existing knowledge, but CNT-reinforced materials can be used to realize this kind of surface texture with a durable, smooth outer surface. This is realized by afore mentioned improved material properties, such as erosion resistance, hardness, pattern accuracy, stiffness and other functional properties resulting from use of CNT as the reinforcing material.

In such way the outer surface of a coating is achieved improving the aerodynamic properties of i.e. the aircraft, e.g. to reduce aerodynamic drag, enhancing the efficiency, etc. The nano structure of the coating can be applied on a portion or on all portions of the airframe, also in areas where mechanical fasteners are used in order to cover these fasteners and reduce the negative aerodynamic effects of having mechanical fasteners in laminar flow areas.

Suitably, the outer ply is a ply of a laminate comprising at least two plies, wherin each ply comprises large fibres (such as carbon or glass fibres) having a fibre orientation different from- or identical with- the fibre orientation of large fibres of an adjacent ply.

In such way, eventual cure shrinkage of the resin in different plies during manufacture of the component due to eventual uneven distribution of resin and different thermal elongation in the plies during the manufacture of an airframe structure comprising the article, will thereby not affect the smoothness of the outer surface.

Preferably, the nano structure is so dense within the outer ply so that it will be as hard as possible, but not so dense that the electric conductivity ceases.

Thereby the hard and smooth aerodynamic surface is suitable to use as a lightning protection for an aircraft. The design of an efficient system for lightning protection functions, containing the conductive nano structure, should be based on the fact that both the electrical conductivity of a bulk material, e.g. a polymer, using these fillers, will vary with the filler content. The electrical conductivity of such a system can for instance increase or decrease with the CNT filler content, depending on specific conditions.

Alternatively, the nano structure's filaments are oriented transverse to the plane of the outer surface.

In such way the mechanical strength of the article is improved in a direction transverse (z-direction) to the plane of the laminate. Thereby an additional strength is achieved for the laminate complementing the strength of the large fibres extending parallel with the extension of the plane of the laminate.

Suitably, the nano structure's filaments are oriented leaning relative the plane of the outer surface.

In such way the nano structure both contributes to reinforcement in z-direction and promotes for electric conductivity beneficial for the lightning protection.

Preferably, the nano structure's filaments are oriented parallel with the plane of the outer surface.

In such way the electrical conductivity can be made optimal at the same time as the eventual exposed nano filaments (i.e. a section of a filament extending from the first end to the second end of the filaments may be exposed) of the nano structure in the outer surface contribute to a hardness of the outer surface providing a long-life smoothness, thereby promoting an economic fuel consumption of an aircraft and a silent powering of a "open rotor" engine aircraft.

Alternatively, the nano structure comprises carbon nano tubes.

Thereby a well-defined nano structure is achieved for the outer surface having an optimal mechanical strength and other properties (stiffness, thermal expansion et cetera) of importance for the application. The well-defined dimensions of the carbon nano tubes promotes for a nano structure layer which can be as thin as possible.

Suitably, the carbon nano tubes are in shape of forest mats of aligned carbon nano tubes.

The CNT (carbon nano tube) can be produced by emerging CNT technology resulting in grown forests of CNT for high efficiency. It is known that CNT can be grown in the shape of "forests" (mats of aligned CNT's) with vertical, tilted or horizontally arranged nano tubes. Combinations of these arrangements are also possible, e.g. as two or more separate layers stacked on top of each other. It is also possible to grow CNT's as well-defined patterns, suited for the intended application. The term CNT in this application includes all types of carbon nano tubes. These can be single-wall, double-wall or multi-wall nano tubes. In addition, CNT-like materials like graphene, graphone and similar carbon-based materials with suitable electrical properties can be used. This includes single or multiple layers arranged in the plane of the outer surface or placed at a suitable angle to this plane. CNT's and similar materials as described above have a very good electrical conductivity and are therefore very suited for the lightning protection function of the article.

Preferably, the nano filament (CNT, nano fibre, nano multi wall filament, nano double wall filament, nano wire etc.) has a length of 0,125 mm or less. This is suitable for a common pre-preg ply having a thickness of 0,125 mm used in the production of aircrafts. If leaning, or in the plane oriented nano filaments are used, the length preferably can be longer. The definition of nano means that a filament particle has at least one dimension not more than 200 nm. 1 nm (nanometre) is defined as 10⁻⁹ metre (0,000 000 001 meter). Preferably, the diameter of a multiwall nano tube is 15-35 nm, suitably 18-22 nm. Suitably, the diameter of a single wall nano tube is 1,2-1,7 nm, preferably 1,35-1,45 nm.

Alternatively, the article is an open rotor blade for a rear mounted open rotor engine.

Thus is achieved an optimal laminar airflow over the aerodynamic surface during the article's whole service life and the aircraft will be less noisy than prior art aircraft propelled by open rotor engines. Prior art open rotor blades have a roughness and shape which causes turbulence over the outer surface and thus will be noisy.

By achieving a less noisy aircraft, commercial use of the latter will be enhanced and due to the low fuel consumption of open rotor engines the aircraft can be made environmental-friendly.

### BRIEF DESCRIPTION OF THE DRAWINGS

The present invention will now be described by way of examples with references to the accompanying schematic drawings, of which:
FIG. 1 illustrates a cross-section of an article comprising resin matrix with an outer ply comprising a nano structure exposed in the outer surface;
FIGS. 2a-2g illustrate cross-sectional portions of outer surface coatings according to various applications;
FIG. 3 illustrates a cross-section of a stabilizer comprising a lightning protective outer surface;
FIG. 4 illustrates an enlarged portion of the outer surface in FIG. 3 from above;
FIG. 5 illustrates a cross-section of leaning CNT's grown as "forests" directly from large fibres of an upper ply;
FIG. 6 illustrates a tail of an aircraft having open rotor engines comprising an open rotor blade;
FIGS. 7a-7b illustrate an outer surface comprising nano fibres;
FIG. 8a illustrates in a perspective view a section of transverse (in z-direction) oriented CNT's being exposed in the outer surface of an article;
FIG. 8b illustrates a cross-section of the article in FIG. 8a;
FIG. 9 illustrates a leading edge slot of an aircraft wing comprising an ice protection system, which in retracted position acts with a smooth aerodynamic surface in cruising speed;
FIG. 10 illustrates a laminate comprising the reinforced outer surface and a nano structure reinforced layer in the underside of the laminate for avoiding a so called spring back-effect during production of the laminate;
FIG. 11a illustrates a prior art laminate; and
FIG. 11b illustrates a laminate according to a further embodiment of the invention.

### DETAILED DESCRIPTION

Hereinafter, embodiments of the present invention will be described in detail with reference to the accompanying drawings, wherein for the sake of clarity and understanding of the invention some details of no importance are deleted from the drawings. Also, the illustrative drawings show nano structures of different types, being illustrated extremely exaggerated and schematically for the understanding of the invention. The conductive nano structures are illustrated exaggerated in the figures also for the sake of understanding of the orientation and the alignment of the conductive nano filaments.

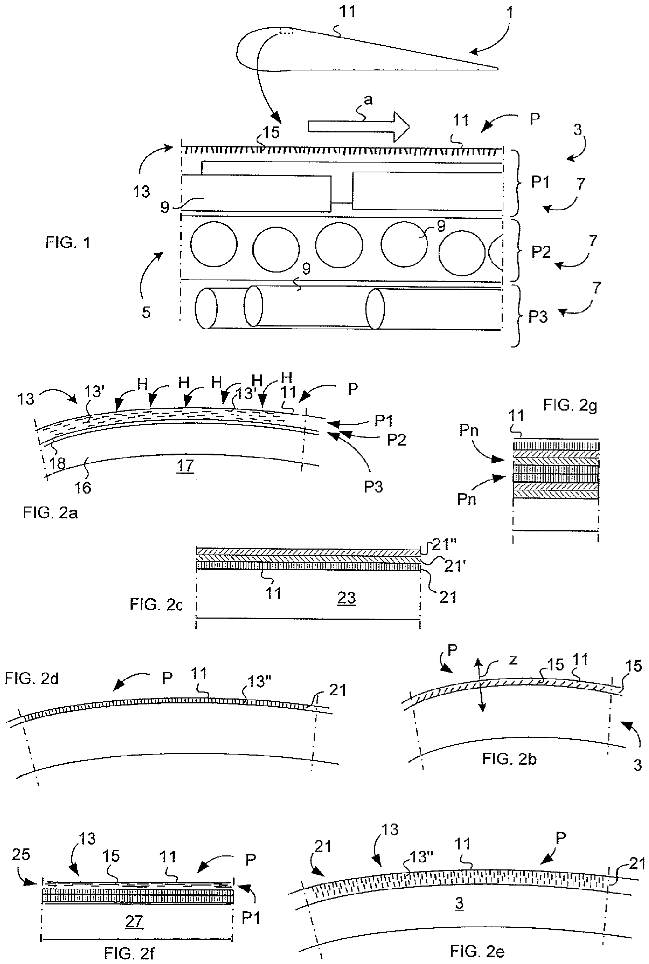

FIG. 1 illustrates a composite airframe structure 1 having an aerodynamic function. The composite airframe structure 1 corresponds in this first embodiment to a wing of an aircraft (not shown).

The wing's wing shell 3 is made of a resin matrix, which comprises a laminate 5 of plies 7. Each ply 7 comprises fibres 9 (in the present application also so called large fibres or traditional laminate reinforcing fibres) having an orientation different from - or identical with - the large fibre orientation of an adjacent ply (the diameter of the large fibre is approximately 6-8 micro metres). An outer ply P1 of the laminate 5 forms an outer surface 11. The outer ply P1 comprises large fibres 9 oriented parallel with the outer surface 11 in a first direction, and the second ply P2 beneath the outer ply P1 comprises large fibres 9 also parallel arranged with the outer surface 11, but with 90 degrees direction relative the first direction. A next layer P3 comprises large fibres 9 with 45 degrees direction relative the first direction.

The wing's outer surface 11, which serves as an aerodynamic surface when the airframe structure 1 is subjected for an air stream a, is arranged with a nano structure 13 comprising carbon nano tubes (CNT's) 15.

The CNT's 15 are embedded in the upper ply P1 in such way that at least a portion of the nano structure 13 is exposed in the outer surface 11.

The CNT's 15 are essentially oriented transverse relative the plane P of the outer surface 11 with one end of the majority of the CNT's 15 being exposed in the outer surface 11. The other ends of the CNT's 15 are directed towards the large fibres 9, but not in contact with these. The CNT-reinforced surface layer (outer surface 11) is thus integrated in the lay-up (lay-up of pre-preg plies P1, P2, P3, etc., forming the laminate 5 after curing) and therefore integrated in the curing of the airframe structure 1.

In such way the outer surface 11 of the wing shell 3 will be smooth over a long period of time. The smoothness is achieved by the exposed carbon nano tubes CNT's 15 embedded in the upper ply P1. The orientation of unidirectional CNT's 15 provides that resin for embedding the CNT's will fill all spaces between the CNT's 15 in the laminate. The airframe structure 1 is thus cost-effective, and otherwise possible, to produce, achieving an article with an aerodynamic surface that fulfils the requirements, even at high speed, for laminar flow. The addition of CNT's 15 (single- or multiwall carbon nano tubes and/or other nano-sized additives with similar function) in this outer ply P1 (outer layer) results in significant improvement of the texture/smoothness of the outer surface 11, in combination with improved hardness and erosion resistance of the same. This is due to the nano-sized reinforcement by the CNT's 15, which reinforcement prevents the otherwise characteristic surface roughness during forming of the outer surface 11 in a forming tool (not shown). The outer surface 11 will be hard and improves erosion resistance associated with thermoset polymeric material. The CNT-reinforced outer surface 11 is thus integrated with the composite airframe structure 1 made of polymeric composite comprising several plies P1, P2, P3, etc.

FIG. 2a schematically ilustrates a portion of an article (a shell 16 of an aileron 17) comprising outer plies P1, P2, P3 comprising horizontal nano filaments 13' (parallelly extending with the plane P of the outer surface 11). The upper ply P1 is a coating covering the article and comprises the nano structure 13 embedded therein in such way that at least a portion of the nano structure 13 is exposed in the outer surface 11, i.e. a portion of the nano filaments 13' is exposed for making the hard outer surface 11, thus maintaining the smoothness of the outer surface 11 over long time for promoting laminar airflow over the outer surface 11 during flight and thus a saving of fuel consumption is achieved.

The plies P1, P2, P3 are in this example applied to the exterior of an existing, already manufactured and assembled airframe structure 17. The application is made by means of adhesive bonding 18. The smoothness of the outer surface 11 is achieved by the nano structure 13 at markings H. This kind of nano-reinforced plies P1, P2, P3 of a composite skin laminate may be used as topcoat.

FIG. 2b schematically illustrates a single upper pre-preg layer used for achieving the hard and smooth outer surface 11, wherein CNT's 15 are arranged leaning relative the outer surface 11 and are embedded in the upper pre-preg layer and have an orientation relative the outer surface 11 with essentially the same angle.

In such way an article is achieved with improved properties, such as smoothness, hardness, form stable laminate etc. for promoting an optimal aerodynamic surface. By the unidirectional orientation of the nano filaments an efficient production of the laminate will be provided. The production means that a resin (used as a resin matrix embedding the nano filaments) flowing between CNT's 15 will have no hindrance and the resin will fill out all spaces between the CNT's 15. Thereby the outer surface 11 will be smooth and hard and form stable.

By this embodiment the CNT-structure also contributes to reinforcement in z-direction z (against forces and strikes acting perpendicular on the outer surface 11) and at the same time promotes for electric conductivity beneficial for lightning protection, wherein the current of the strike propagates in a direction parallel with the plane P of the outer surface 11, wherein the interior of the article will be protected.

FIG. 2c schematically shows a precured surface layer 21 (or outer ply) applied in a curing tool 23 before curing. The precured surface layer 21 comprises an outer surface 11 facing the tool's 23 forming surface. The precured surface layer 21 comprises further two CNT-reinforced sub-layers 21', 21", each being nano structure reinforced in a spectific direction coresponding with the nano filaments unidirectional orientation. Thereby a multidirectional reinforcement is achieved for the precured surface layer 21 per se. By the unidirectional orientation of the nano filaments in each layer 21, 21', 21" an effective production of the laminate will be provided

FIG. 2d schematically in cross-section shows a portion of an article having an aerodynamic surface (outer surface 11). A surface layer 21 comprising transversal (perpendicular to the plane P of outer surface 11) oriented carbon nano fibres 13", arranged in the surface layer 21 so that the carbon nano fibres 13" are partly exposed in the outer surface 11 of the surface layer 21. Not exposed nano structure filaments in the outer surface are shown in e.g. the FIG. 2b embodiment.

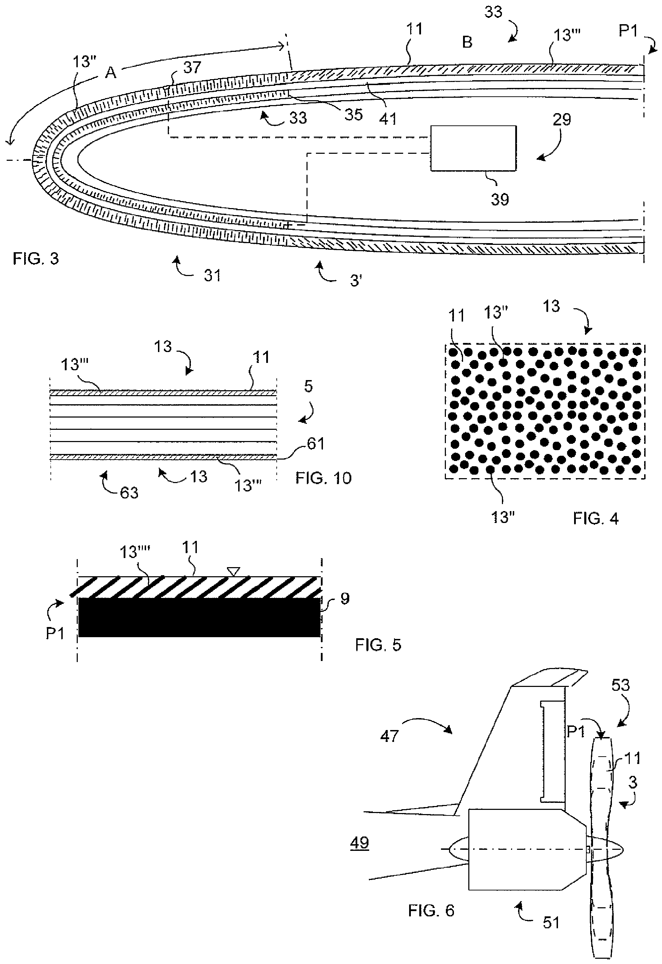

FIG. 2e schematically shows an example of a surface layer 21 to be applied to a composite shell of a wing shell 3 made of CFRP (carbon fibre reinforced plastic (CFRP) structures). The layer is positioned in a female tool prior an application of CFRP and prior a curing operation to form the outer surface 11 of the cured assembly. The surface layer 21 thus also comprises large carbon fibres (not shown) embedded in the resin, thus in addition reinforcing the structure of the wing shell 3. Carbon nano fibres 13" are embedded in the surface layer 21 (the upper ply) and are essentially oriented transversally to the plane P of the outer surface 11 with one end of the majority of the CNT's 15 being at a distance from the outer surface 11. The other ends of the CNT's 15 are directed towards the large fibres 9, but not in contact with these (The FIG. 5 embodiment shows nano filaments in contact with large fibres).

FIG. 2f schematically shows an example of a coating 25 applied to a metallic airframe structure 27 as a separate coating. The coating 25 comprises random distribution of CNT's 15 in a plane parallel with the plane P of the outer surface 11 (different directions of CNT extensions along the plane P of the laminate but with CNT prolongations parallel with the plane P). The coating 25 thus comprises embedded CNT's 15 in the matrix of the upper ply P1.

The resin matrix is thus made of a laminate of one ply or coating 25, which comprises the outer surface 11. The coating 25 comprises a CNT's 15 embedded therein in such way that the filaments of the CNT structure in the coating 25 have the same orientation relative the plane P of the outer surface 11. The specific orientation of the CNT's 15 thus provides that resin for embedding the CNT's will fill all air spaces between the CNT's 15 in the laminate during the production of the laminate.

FIG. 2g schematically illustrates a laminate comprising several plies comprising nano structure filaments. Each ply Pn comprises nano filaments having the same orientation (unidirectional orientation). Each ply Pn comprises a nano filament orientation being different from the orientations of the nano filaments of the other plies. This promotes for an optimal mechanical strength providing said smoothness.

FIG. 3 schematically illustrates an example of a de-icing/anti-icing system 29 of a stabilizer 31 (comprising a shell 3') of an aircraft (not shown). The system 29 comprises a conductive structure serving as a heating element 35. The heating element 35 comprises a conductive nano structure 33 with such an orientation and density so that the electrical resistance increases for a current conducted through the heating element 35 thereby generating heat for melting or preventing ice to form. A sensor 37 is also arranged in the outer surface 11. When the sensor 37 detects the presence of ice, a signal is fed from the sensor 37 to a control unit 39, wherein the control unit 39 activates the heating element 35.

An outer ply P1, comprising the outer surface 11, is arranged over the heating element 35. Also the outer ply P1 comprises the same type of conductive nano structure 33 as the de-icing/ant-icing heating element 35. In area A for the outer ply P1, the nano structure filaments are transversely oriented partly exposed in the outer surface 11, whereby an optimal strength of the outer surface 11 is achieved. At the same time the nano structure 13, which also is conductive, will promote for a propagation of an eventual lightning strike current to a lightning conductor (not shown) protecting the de-icing/anti-icing system 29. The outer ply P1 is electrical isolated arranged in regard to the de-icing/ant-icing heating element 35 by means of an isolating layer 41. Due to the transversely oriented nano structure 13" for area A in the outer ply P1 (acting as a lightning protection) also heat from the heating element 35 will be transferred thermally to the outer surface 11 in a path as short as possibly, thus concentrating the heat to area A, acting as an anti-icing section.

The leaning nano filaments 13"' of the outer ply P1 for area B contributes to reinforcement in z-direction and promotes for good electric conductivity, beneficial for the lightning protection.

FIG. 4 schematically illustrates an enlarged view of a section of the outer surface 11 of the stabilizer 31 in FIG. 3 seen from above. In the FIG. 4 is clearly illustrated that the nano structure filaments 13" (here nano fibres) are exposed in the outer surface 11, thus creating a hard and smooth aerodynamic surface.

FIG. 5 schematically illustrates a cross-section of leaning CNT's 13"" grown as a "forests" directly extending from large fibres 9 of a laminate 5 comprising the upper ply P1. The CNT's 13"" are produced by emerging CNT technology resulting in grown forests of CNT's for high efficiency. The CNT's 13"" are thus grown in the shape of "forests" (mats of aligned CNT's) and the outer ply P1 consists of a single layer. The CNT's 13"" have a very good thermal and electrical conductivity and are therefore very suited for the lightning protection covering for example a sensitive de-icing/anti-icing system, electrical system etc. By embedding the CNT's 13"" in the upper ply P1 in such way that the orientation of the CNT's relative the outer surface 11 is unidirectional, the laminate can be effectively manufactured since a proper distribution of resin will be achieved. Thereby the aerodynamic surface will be hard, smooth and form stable.

FIG. 6 schematically illustrates a tail 47 of an aircraft 49 having open rotor engines 51 comprising open rotor blades 53. Open rotor engines generally work in a way similar to high-bypass turbofans, which use a central gas-turbine to drive a larger-diameter fan which rams a lot more air through the outer part of the engine. This makes for much better fuel efficiency than a turbine and its compressor alone. However, the fan of the turbine is enclosed inside the engine's nacelle, which cuts down on noise but limits the area of air on which the blades can work. For true efficiency, larger rotor blades will give the best economy, saving as much as 25% of fuel compared with a traditional propelled aircraft. However, the engine is not environmental friendly in view of noise.

By orienting the nano structure filaments in the laminate (for each ply) in essentially the same direction, the laminate can be effectively manufactured since a proper distribution of resin during the production will be achieved. Thereby the aerodynamic surface will be hard, smooth and form stable. The smoothness of the open rotor blade 53 can thus be maintained over time. The smoothness promotes for a laminar flow over the open rotor blades 53, wherein the engine will work more silent than prior art open rotor engine systems. Furthermore, the outer surfaces 11 of the open rotor blades 53 will not have the undesired roughness due to several contributing effects, e.g. cure shrinkage of the polymeric material during the curing of the laminate, uneven distribution of resin in the surface layer (resin-rich-areas) and therefore different thermal elongation of surface material etc. This will promote for a well-designed laminate of the open rotor blades 53.

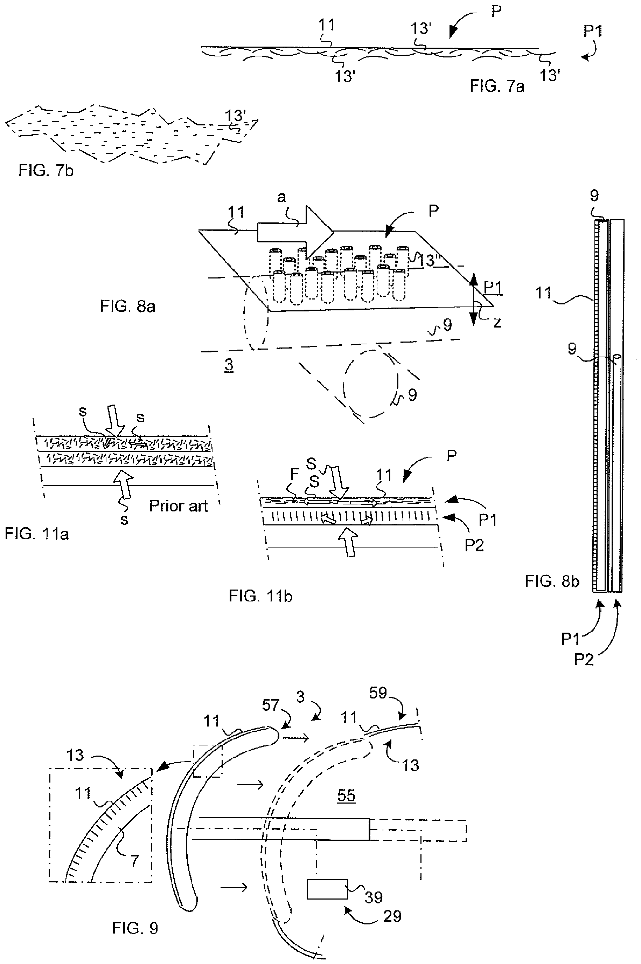

FIG. 7a schematically illustrates an outer surface 11 of an aircraft comprising nano carbon fibres 13' embedded in an upper layer (upper ply P1) of plastic. The upper layer is of the type shown in FIG. 2a with the carbon nano fibres essentailly extending parallel with the plane P of the outer surface 11 (having the same orientation relative the plane P of the outer surface 11). The upper layer also being comprised of large carbon fibres (not shown) embedded in the plastic reinforcing the structure of the article (carbon fibre reinforced plastic (CFRP) structures). The carbon nano fibres 13' are embedded in the plastic in such way that at least a portion of the carbon nano fibres 13' are exposed in the outer surface 11, i.e. several carbon nano fibres 13' are exposed in the outer surface 11 for making a hard outer surface, thus maintaining the smoothness of the outer surface 11 over long time for promoting a saving in fuel consumption of the aircraft during flight. The use of the nano carbon fibres 13' for making a hard surface is thus compatible regarding the thermal elongation with the carbon fibre reinforced plastic (GFRP). FIG. 7b schematically illustrates the outer surface 11 in FIG. 7a from above, wherein is shown the partly exposed nano carbon fibres 13'.

FIG. 8a schematically shows a perspective view of transversally grown CNT's 13" as a "forest" directly extending from large horizontal (parallel extension with the plane P of the outer surface) carbon fibres 9 of an upper ply P1. The CNT's 13" are produced by emerging CNT technology resulting in grown forests of CNT. The vertical CNT's 13" are well-defined and contribute also to a strengthening in z-direction, marked with z. FIG. 8b schematically shows a cross-section of the upper ply P1 in FIG. 8a. Also is shown in FIG. 8b a ply P2 with large carbon fibres 9 (of the GFRP) arranged beneath the upper ply P1, which fibres 9 are oriented 45 degrees relative the large carbon fibres' 9 orientation of the upper ply P1, serving as a substrate for the growing of the transversal carbon nano tubes 13" during the production process.

FIG 9 schematically illustrates in a cross-section a leading edge 55 of an aircraft wing. The leading edge 55 is provided with a retractable slot 57 for reducing the stall speed thus promoting good low-speed handling qualities of the aircraft. A de-icing/anti-icing system 29 is arranged for the leading edge slot 57. The outer surface 11 of the slot 57 comprises an exposed conductive nano structure 13 for providing a thermal conductive function of the outer surface 11 so that the slot 57 in expelled position will be heated in case of icing condition during landing and/or take-off. A current is fed to the conductive nano structure 13 via a conductor controlled by a control unit 39. When the slot 57 is retracted in the leading edge 55 of the wing for cruising speed, the de-icing/anti-icing system 29 will be shut down and no current is fed to the conductive nano structure 13 arranged for de-icing/anti-icing system, wherein the system will be electrical disconnected from the conductive nano structure. The de-icing/anti-icing system 29 of the slot 57 will thus be electrically isolated when the slot 57 is retracted during cruising speed of the aircraft. The conductive nano structure 13 of the slot 57 now serves, together with a lightning protection layer 59 of the wing shell, also comprising a conductive nano structure 13, as a lightning protection in case of lightning strike. By embedding the conductive nano structure filaments 13 in the upper ply in such way that the orientation of the nano filaments relative the outer surface 11 is unidirectional, the laminate can be effectively manufactured since a proper distribution of resin will be achieved. Thereby the aerodynamic surface will be hard, smooth and form stable.

FIG. 10 schematically illustrates a laminate 5 comprising the reinforced outer surface 11 and a nano structure reinforced layer 61 of the underside 63 of the laminate 5 for avoiding a so called spring back-effect during production of the laminate 5. During production of the laminate 5 a nano structure 13 thus will be applied also on the side of the laminate opposite the outer surface 11. This is made for preventing that residual stresses of the upper side of the laminate 5 buckle the laminate 5, i.e. compensating the applied nano structure 13 of the outer surface 11 with a proper amount of nano structure filaments 13'" in the laminate's 5 underside 63 essentially corresponding with the amount of nano structure filaments 13'" in the outer surface 11.

FIG. 11a schematically shows a laminate according to prior art. Carbon nano tubes are randomly oriented in the upper ply. During manufacturing of the article the resin will be hindered to flow efficient into the spaces between the carbon nano tubes (illustrated with arrows s).

FIG. 11b schematically illustrates an embodiment of the present invention comprising a first upper ply P1 and a second ply P2 arranged beneath the upper ply P1. The both plies P1 and P2 include embedded nano filaments therein. The upper ply P1 comprises nano filaments F being applied as a mat onto the second ply P2. The mat is manufactured by a procedure similar to a production of ordinary paper. The nano filaments F are mixed with a liquid. The liquid are poured out and the remaining nano filaments F will form a mat of random oriented nano filaments (seen in a view from above and towards the plane of the mat). However, the mat will have nano filaments with their prolongations extended in a direction parallel with the plane of the mat, i.e. the extension of the nano filaments F will be essential parallel with the extension of the plane P of the outer surface 11. During the production of the laminate a resin used as a resin matrix will flow into the mat unhindered and will fill all spaces (arrows marked with S) between the nano filaments F, thus providing a hard and even (smooth) outer surface being form stable.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

The nano structure filaments can be embedded in the upper ply in such way that a portion of the nano filaments is exposed in the outer surface. This means that a portion of the nano structure is exposed in the outer surface meaning that the filaments, including a first and second end, of that portion are exposed. They may thus expose their first ends in the outer surface.

A typical composite component such as a wing skin and an integrated wing leading edge of CFRP or similar material could, as an example, be cured in a female tool. The invented surface layer (precured or uncured) can be placed in this tool before the curing operation to form the outer layer of the cured assembly. The CNT-reinforced surface layer can be integrated in the lay-up and curing of the composite airframe component. The CNT-reinforced surface layer can also be applied as a spray-on layer (e.g. by electro-static painting) or separately manufactured layer that is attached to the composite structure after curing.

The CNT's can be produced by emerging CNT technology resulting in grown forests of CNT for high efficiency. It is known that CNT's preferably are grown in the shape of "forests" (mats of aligned CNT's) with vertical, tilted or horizontally arranged nano tubes. Combinations of these arrangements are also possible, e.g. as two or more separate layers stacked on top of each other. It is also possible to grow CNT's as well-defined patterns, suited for the intended application. The term CNT is this application includes all types of carbon nano tubes. These can be single-wall, double-wall or multi-wall nano tubes. In addition, CNT-like materials like graphene, graphone and similar carbon-based materials with suitable electrical and thermal properties can be used. The composite of the outer ply/outer layer can be epoxy, polymides, bismaleimides, phenolics, cyanatester, PEEK, PPS, polyester, vinylester and other curable resins or mixtures thereof. If used, the large fibre structure may be of ceramic, carbon and metal or mixtures thereof.

Plies comprising the nano structure can be applied to the exterior of an existing, already manufactured and assembled airframe structure. The application can be made by means of adhesive bonding or co-cured or co-bonded on the airframe structure.

## Claims

1. An article comprising an outer surface (11), which serves as an aerodynamic surface when the article (3, 3', 16, 27, 53) is subjected to an air stream (a), wherein the article (3, 3', 16, 27, 53) comprises a polymeric composite laminate (5), said polymeric composite laminate comprising an outer ply (P1), which outer ply comprises said outer surface (11), wherein the outer ply (P1) comprises a nano structure (13) embedded in a resin matrix, and wherein said nano structure (13) comprises nano filaments, **characterized in that** the nano filaments (13', 13", 13"', 13"") of the nano structure in the outer ply (P1) essentially have the same angular orientation relative the plane (P) of the outer surface (11) so that the resin during production of the laminate has filled out all air spaces between the nano filaments, and **in that** the laminate (5) comprises the outer ply (P1) and at least a second ply (P2), wherin each ply (P1, P2) comprises large fibres (9) having an orientation different from or identical to the orientation of large fibres (9) of an adjacent ply (P2, P1).

2. The article according to claim 1, **wherein** at least a portion of the nano structure (13) is exposed in the outer surface (11).

3. The article according to claim 1 or 2, **wherein** the nano structure (13) has a density within the ply (P1, P2) such that it is hardbut not so dense that the electric conductivity ceases.

4. The article according to any of preceding claims, **wherein** the nano structure's filaments (13', 13", 13"', 13"") are oriented transverse to the plane (P) of the outer surface (11).

5. The article according to any of claim 1-3, **wherein** the nano structure's filaments (13', 13", 13"', 13"") are oriented leaning relative the plane (P) of the outer surface (11).

6. The article according to any of claim 1-3, **wherein** the nano structure's filaments (13', 13", 13"', 13"") are oriented parallel with the plane (P) of the outer surface (11).

7. The article according to any of the preceding claims, **wherein** the nano structure (13) comprises carbon nano tubes.

8. The article according to claim 7, **wherein** the carbon nano tubes are in shape of forest mats of aligned carbon nano tubes (13"").

9. The article according to any of the preceding claims, **wherein** the article is an open rotor blade (53) for a rear mounted open rotor engine (51).

## Patentansprüche

1. Gegenstand umfassend eine Außenfläche (11), die als eine aerodynamische Oberfläche dient, wenn der Gegenstand (3, 3', 16, 27, 53) einem Luftstrom (a) ausgesetzt wird, wobei der Gegenstand (3, 3', 16, 27, 53) ein Polymerverbundlaminat (5) umfasst, wobei das Polymerverbundlaminat eine äußere Lage (P1) umfasst, welche äußere Lage die Außenfläche (11) aufweist, wobei die äußere Lage (P1) eine Nanostruktur (13) aufweist, die in einem Harzmatrix eingelagert ist, und wobei die Nanostruktur (13) Nanofäden umfasst, **dadurch gekennzeichnet, dass** die Nanofäden (13', 13", 13"', 13"") der Nanostruktur in der äußeren Lage (P1) im Wesentlichen die gleiche Winkelausrichtung im Verhältnis zur Ebene (P) der Außenfläche (11) aufweisen, so dass das Harz während der Herstellung des Laminats alle Lufträume zwischen den Nanofäden ausfüllt, und dass das Laminat (5) die äußere Lage (P1) und mindestens eine zweite Lage (P2) umfasst, wobei jede Lage (P1, P2) große Fasern (9) mit einer Orientierung, die zur Orientierung von großen Fasern (9) einer angrenzenden Lage (P2, P1) verschieden oder identisch ist, umfasst.

2. Gegenstand nach Anspruch 1, **wobei** mindestens ein Teil der Nanostruktur (13) in der Außenfläche (11) freigelegt ist.

3. Gegenstand nach Anspruch 1 oder 2, **wobei** die Nanostruktur (13) eine Dichte innerhalb der Lage (P1, P2) aufweist, so dass sie hart ist, jedoch nicht so dicht, dass die elektrische Leitfähigkeit nachlässt.

4. Gegenstand nach einem der vorgehenden Ansprüche, **wobei** die Fäden (13', 13", 13"', 13"") der Nanostruktur quer zur Ebene (P) der Außenfläche (11) ausgerichtet sind.

5. Gegenstand nach einem der Ansprüche 1-3, **wobei** die Fäden (13', 13", 13"', 13"") der Nanostruktur neigend zur Ebene (P) der Außenfläche (11) ausgerichtet sind.

6. Gegenstand nach einem der Ansprüche 1-3, **wobei** die Fäden (13', 13", 13"', 13"") der Nanostruktur parallel zur Ebene (P) der Außenfläche (11) ausgerichtet sind.

7. Gegenstand nach einem der vorgehenden Ansprüche, **wobei** die Nanostruktur (13) Kohlenstoffnanoröhren umfasst.

8. Gegenstand nach Anspruch 7, **wobei** die Kohlenstoffnanoröhren die Form von Waldunterlagen von aneinandergereihten Kohlenstoffnanoröhren (13"").

9. Gegenstand nach einem der vorgehenden Ansprüche, **wobei** der Gegenstand ein offenes Rotorblatt (53) für einen hintermontierten offenen Rotormotor (51) ist.

## Revendications

1. Article comprenant une surface extérieure (11), servant de surface aérodynamique lorsque l'article (3, 3', 16, 27, 53) est soumis à un flux d'air (a), l'article (3, 3', 16, 27, 53) comprenant un stratifié composite polymère (5), ledit stratifié composite polymère comprenant une couche extérieure (P1), ladite couche extérieure comprenant ladite surface extérieure (11), la couche extérieure (P1) comprenant une nanostructure (13) encastrée dans une matrice de résine, et ladite nanostructure (13) comprenant des nano-filaments, **caractérisé en ce que** les nano-filaments (13', 13", 13"', 13"") de la nanostructure dans la couche extérieure (P1) ont essentiellement la même orientation angulaire par rapport au plan (P) de la surface extérieure (11) si bien que la résine lors de la production du stratifié a rempli tous les espaces d'air entre les nano-filaments, et **en ce que** le stratifié (5) comprend la couche extérieure (P1) et au moins une deuxième couche (P2), chaque couche (P1, P2) comprenant des fibres larges (9) ayant une orientation différente de ou identique à l'orientation de fibres larges (9) d'une couche adjacente (P2, P1).

2. Article selon la revendication 1, dans **lequel** au moins une portion de la nanostructure (13) est exposée dans la surface extérieure (11).

3. Article selon la revendication 1 ou 2, dans **lequel** la nanostructure (13) présente une densité dans la couche (P1, P2) telle qu'elle est dure, mais pas si dense que la conductivité électrique cesse.

4. Article selon l'une quelconque des revendications précédentes, dans **lequel** les filaments de la nanostructure (13', 13", 13"', 13"") sont orientés transversalement au plan (P) de la surface extérieure (11).

5. Article selon l'une quelconque des revendications 1 à 3, dans **lequel** les filaments de la nanostructure (13', 13", 13"', 13"") sont orientés en se penchant par rapport au plan (P) de la surface extérieure (11).

6. Article selon l'une quelconque des revendications 1 à 3, dans **lequel** les filaments de la nanostructure (13', 13", 13"', 13"") sont orientés parallèlement au plan (P) de la surface extérieure (11).

7. Article selon l'une quelconque des revendications précédentes, dans **lequel** la nanostructure (13) comprend des nanotubes de carbone.

8. Article selon la revendication 7, dans **lequel** les nanotubes de carbone ont la forme de tapis forestiers de nanotubes de carbone alignés (13"").

9. Article selon l'une quelconque des revendications précédentes, **dans lequel** l'article est une pale de rotor ouverte (53) pour un moteur à rotor ouvert monté à l'arrière (51).
